# EUROPEAN PATENT APPLICATION

(11) **EP 4 622 339 A1**
(43) Date of publication of application: **24.09.2025**
(21) Application number: 23909869.2
(22) Date of filing: 27.11.2023
(51) Int. Cl.: H04W 28/18

(54) **CHANNEL DETERMINATION METHOD AND RELATED APPARATUS**

(30) Priority: 30.12.2022 CN 202211733570
(71) Applicant: Huawei Technologies Co., Ltd., Shenzhen, Guangdong 518129 (CN)
(72) Inventor: LIU, Zhengqi, Shenzhen, Guangdong 518129 (CN); LIU, Ya, Shenzhen, Guangdong 518129 (CN); TANG, Guowang, Shenzhen, Guangdong 518129 (CN)
(74) Representative: Gill Jennings & Every LLP
(86) International application number: PCT/CN2023/134506
(87) International publication number: WO 2024/139938

(57) **Abstract**

This application provides a channel determining method and a related apparatus, to reduce a data transmission delay and improve user experience. The method includes: A first terminal sends a first channel list to a second terminal, where the first channel list includes a channel supported by the first terminal; the first terminal receives a second channel list from the second terminal, where the second channel list includes a channel supported by the second terminal; and the first terminal communicates with the second terminal through a third channel, where the third channel is a channel included in both the first channel list and the second channel list.

## Description

This application claims priority to Chinese Patent Application No. 202211733570.2, filed with the China National Intellectual Property Administration on December 30, 2022 and entitled "CHANNEL DETERMINING METHOD AND RELATED APPARATUS", which is incorporated herein by reference in its entirety.

### TECHNICAL FIELD

This application relates to the communication field, and in particular, to a channel determining method and a related apparatus.

### BACKGROUND

In a many-to-many network (which may also be referred to as a peer-to-peer network), a plurality of terminals connected to each other are equal, and an associated channel between two parties that establish a link is not limited and may be randomly selected. For example, in a screen projection scenario, a first terminal projects a screen to a second terminal in a wireless connection manner, and in a screen projection process, the first terminal establishes a wireless connection to a wireless access point (access point, AP), and performs internet access or another internet operation. A channel A is used for projection, and a channel B is used for internet access via wireless fidelity (wireless fidelity, Wi-Fi). If the first terminal does not support a dual band dual concurrent (dual band dual concurrent, DBDC) mode, the first terminal is in a dual band adaptive concurrent (dual band adaptive concurrent, DBAC) mode. To be specific, the first terminal can only operate on the channel A for a period of time, and operate on the channel B for a period of time. Consequently, a projection speed and an internet access speed are unstable, a data transmission delay is greatly increased, and user experience is poor.

### SUMMARY

This application provides a channel determining method and a related apparatus, to reduce a data transmission delay and improve user experience.

According to a first aspect, a channel determining method is provided, and may be applied to a first terminal. For example, the method may be performed by the first terminal, may be performed by a component (such as a chip or a chip system) configured in the first terminal, or may be implemented by a logical module or software that can implement all or some functions of the first terminal. This is not limited in this application.

For example, the method includes: sending a first channel list, where the first channel list includes a channel supported by the first terminal; receiving a second channel list from a second terminal, where the second channel list includes a channel supported by the second terminal; and communicating with the second terminal through a third channel, where the third channel is a channel included in both the first channel list and the second channel list.

According to this method, the first terminal and the second terminal respectively send, to a peer end, the respective channel supported by the terminal itself, and determine, based on the received channel and the channel supported by the terminal itself, the third channel used for communication. In this way, the first terminal and the second terminal may communicate with each other through a channel supported by both the two terminals, and when the terminals do not support a DBDC mode, the terminals may operate in an intra-frequency and intra-channel mode. This avoids a DBAC mode, effectively reduces a data transmission delay, and improves user experience. For example, if the first terminal is accessing an internet via Wi-Fi before the two terminals exchange the supported channels, the channel supported by the first terminal may be a channel for internet access, and when the second terminal also supports the channel, the two terminals may communicate with each other through the channel. In this way, when the terminal does not support a DBDC mode, a case in which a channel used by the terminal for internet access is inconsistent with a channel used for communication between terminals can be avoided, that is, a DBAC scenario is avoided, thereby reducing a data transmission delay and improving user experience.

The first channel list and the second channel list in this embodiment of this application may be transmitted in another short-range manner such as Bluetooth or Wi-Fi.

With reference to the first aspect, in some implementations of the first aspect, the channel supported by the first terminal is determined based on a frequency band supported by the first terminal, a chip capability of the first terminal, and a channel used by the first terminal.

For example, the channel used by the first terminal indicates a current connection status of the first terminal. For example, if the first terminal is currently accessing an internet via Wi-Fi, the channel used by the first terminal is a channel for internet access via Wi-Fi; or if the first terminal is currently communicating with a third terminal, the channel used by the first terminal is a channel for communicating with the third terminal.

Optionally, when the first terminal does not use a channel, the channel supported by the first terminal is determined based on the frequency band supported by the first terminal and the chip capability of the first terminal.

Optionally, when the first terminal uses a channel, the channel supported by the first terminal is determined based on the frequency band supported by the first terminal, the chip capability of the first terminal, and the channel used by the first terminal.

With reference to the first aspect, in some implementations of the first aspect, the frequency band includes a 2.4 gigahertz (gigahertz, GHz) (which may be denoted as 2.4G) frequency band, a 5G frequency band, and a 6G frequency band.

It should be understood that the frequency band supported by the first terminal may further include another evolved frequency band. This is not limited in this application.

With reference to the first aspect, in some implementations of the first aspect, the chip capability includes supporting dual band dual concurrent or supporting dual band adaptive concurrent, the dual band dual concurrent indicates that the first terminal can simultaneously perform communication in different frequency bands, and the dual band adaptive concurrent indicates that the first terminal can perform time division multiplexing communication in different frequency bands.

For example, when the frequency bands supported by the first terminal are a 2.4G frequency band and a 5G frequency band, a chip in the first terminal supports the dual band dual concurrent, and the first terminal does not use a channel, channels supported by the first terminal are all channels in the 2.4G frequency band and all channels in the 5G frequency band; or when the frequency bands supported by the first terminal are a 2.4G frequency band and a 5G frequency band, a chip in the first terminal supports the dual band adaptive concurrent, and the first terminal uses a channel, for example, uses a channel A in the 2.4G frequency band for internet access, channels supported by the first terminal are the channel A in the 2.4G frequency band and all channels in the 5G frequency band.

For example, when the frequency bands supported by the first terminal are a 2.4G frequency band and a 5G frequency band, a chip in the first terminal supports the dual band adaptive concurrent, and the first terminal does not use a channel, channels supported by the first terminal are all channels in the 2.4G frequency band and all channels in the 5G frequency band; or when the frequency bands supported by the first terminal are a 2.4G frequency band and a 5G frequency band, a chip in the first terminal supports the dual band adaptive concurrent, and the first terminal uses a channel, for example, uses a channel A in the 2.4G frequency band for internet access, channels supported by the first terminal are the channel A in the 2.4G frequency band.

With reference to the first aspect, in some implementations of the first aspect, the method further includes: sending information about the third channel to the second terminal.

It should be understood that the information about the third channel may be a channel identifier of the third channel or other information identifying the third channel. This is not limited in this application.

With reference to the first aspect, in some implementations of the first aspect, the method further includes: sending a fourth channel list, where the fourth channel list includes a channel determined when the channel supported by the first terminal changes.

For example, the fourth channel list may be notified to another terminal (including the second terminal) in another short-range communication manner such as Bluetooth or Wi-Fi, or the fourth channel list may be carried in a notification frame and sent to another terminal (including the second terminal) through a Wi-Fi synchronization slot.

With reference to the first aspect, in some implementations of the first aspect, the method further includes: sending a switching request, where the switching request is used to request to switch to a channel determined based on the fourth channel list and the second channel list.

It should be understood that the switching request is sent by the first terminal to a controlling device. Correspondingly, the controlling device receives the switching request, and sends a response message to another terminal (including the first terminal), where the response message indicates that the first terminal and the second terminal can communicate with each other through the channel determined based on the fourth channel list and the second channel list.

The controlling device in this application is configured to: manage a device in a many-to-many network, send a beacon frame, synchronize time, manage a channel, and the like.

Based on this, when the channel supported by the first terminal changes, a DBAC scenario of the first terminal can be effectively avoided.

With reference to the first aspect, in some implementations of the first aspect, the method further includes: when channels supported by the first terminal are in a plurality of frequency bands, sorting the plurality of channels based on types of the frequency bands; and when each frequency band includes a plurality of channels, sorting, based on channel quality, the channels included in each frequency band, to obtain the first channel list.

For example, when the channels supported by the first terminal are a channel A in a 2.4G frequency band and all channels in a 5G frequency band, the first terminal may preferentially arrange all the channels in the 5G frequency band, and then arrange the channel A in the 2.4G frequency band; and then, the first terminal may sort all the channels in the 5G frequency band based on channel quality, to obtain the first channel list.

With reference to the first aspect, in some implementations of the first aspect, the first channel list and the second channel list jointly include one or more channels, and the third channel is a first channel of the one or more channels.

According to a second aspect, a channel determining method is provided, and may be applied to a second terminal. For example, the method may be performed by the second terminal, may be performed by a component (such as a chip or a chip system) configured in the second terminal, or may be implemented by a logical module or software that can implement all or some functions of the second terminal. This is not limited in this application.

For example, the method includes: receiving information about a third channel, where the third channel is a channel included in both a first channel list and a second channel list, the first channel list includes a channel supported by a first terminal, and the second channel list includes a channel supported by the second terminal; and communicating with the first terminal through the third channel.

According to this method, the second terminal receives the information about the third channel used for communication, so that the second terminal communicates with the first terminal through the third channel. Because the third channel is a channel included in both the first channel list and the second channel list, that is, the third channel is a channel supported by both the first terminal and the second terminal, when the first terminal and the second terminal communicate with each other through the third channel, a DBAC scenario can be effectively avoided when the terminal does not support a DBDC mode, a data transmission delay can be reduced, and user experience can be improved.

With reference to the second aspect, in some implementations of the second aspect, the channel supported by the second terminal is determined based on a frequency band supported by the second terminal, a chip capability of the second terminal, and a channel used by the second terminal.

For example, the channel used by the second terminal indicates a current connection status of the second terminal. For example, if the second terminal is currently accessing an internet via Wi-Fi, the channel used by the second terminal is a channel for internet access via Wi-Fi; or the second terminal is currently communicating with another terminal (excluding the first terminal), the channel used by the second terminal is a channel for communication with the another terminal (excluding the first terminal).

Optionally, when the second terminal does not use a channel, the channel supported by the second terminal is determined based on the frequency band supported by the second terminal and the chip capability of the first terminal.

Optionally, when the second terminal uses a channel, the channel supported by the second terminal is determined based on the frequency band supported by the second terminal, the chip capability of the second terminal, and the channel used by the second terminal.

With reference to the second aspect, in some implementations of the second aspect, the frequency band includes a 2.4G frequency band, a 5G frequency band, and a 6G frequency band.

With reference to the second aspect, in some implementations of the second aspect, the chip capability includes supporting dual band dual concurrent or supporting dual band adaptive concurrent, the dual band dual concurrent indicates that the second terminal can simultaneously perform communication in different frequency bands, and the dual band adaptive concurrent indicates that the second terminal can perform time division multiplexing communication in different frequency bands.

With reference to the second aspect, in some implementations of the second aspect, the method further includes: receiving a fourth channel list, where the fourth channel list includes a channel determined when the channel supported by the first terminal changes.

For descriptions of the fourth channel list, refer to related descriptions in the first aspect. Details are not described herein again.

With reference to the second aspect, in some implementations of the second aspect, the method further includes: receiving a switching request, where the switching request is used to request to switch to a channel determined based on the fourth channel list and the second channel list.

For descriptions of the switching request, refer to related descriptions in the first aspect. Details are not described herein again. However, it should be understood that the switching request is received when the second terminal serves as a controlling device. For descriptions of the controlling device, also refer to the related descriptions in the first aspect.

With reference to the second aspect, in some implementations of the second aspect, the method further includes: when channels supported by the second terminal are in a plurality of frequency bands, sorting the plurality of channels based on types of the frequency bands; and when each frequency band includes a plurality of channels, sorting, based on channel quality, the channels included in each frequency band, to obtain the second channel list.

With reference to the second aspect, in some implementations of the second aspect, the first channel list and the second channel list jointly include one or more channels, and the third channel is a first channel of the one or more channels.

According to a third aspect, a communication apparatus is provided and is configured to perform the method in any possible implementation of any one of the foregoing aspects. Specifically, the apparatus includes a module configured to perform the method in any one of the possible implementations of any one of the foregoing aspects.

In a design, the communication apparatus may include modules that one-to-one correspond to the methods/operations/steps/actions described in any one of the foregoing aspects, and the modules may be implemented by a hardware circuit, software, or a combination of a hardware circuit and software.

In another design, the communication apparatus is a communication chip, and the communication chip may include an input circuit or interface configured to send information or data, and an output circuit or interface configured to receive information or data.

In another design, the communication apparatus is a first terminal, and the first terminal may include a transmitter device configured to send information or data, and a receiver device configured to receive information or data.

In another design, the communication apparatus is a second terminal, and the second terminal may include a transmitter device configured to send information or data, and a receiver device configured to receive information or data.

In another design, the communication apparatus is configured to perform the method in any possible implementation of any one of the foregoing aspects, and the communication apparatus may be configured in the first terminal or the second terminal.

According to a fourth aspect, another communication apparatus is provided, including a processor. The processor is configured to execute a computer program, to enable the communication apparatus to perform the method in any possible implementation of any one of the foregoing aspects.

Optionally, the communication apparatus further includes a memory, and the memory is configured to store the computer program.

Optionally, there are one or more processors, and there are one or more memories.

Optionally, the memory may be integrated with the processor, or the memory and the processor are separately disposed.

Optionally, the communication apparatus further includes a transmitter device (transmitter) and a receiver device (receiver). The transmitter device and the receiver device may be separately disposed, or may be integrated together, and are referred to as a transceiver device (transceiver).

According to a fifth aspect, a computer program product is provided. The computer program product includes a computer program (which may also be referred to as code or instructions), and when the computer program is run, a computer is enabled to perform the method in any possible implementation of any one of the foregoing aspects.

According to a sixth aspect, a computer-readable storage medium is provided. The computer-readable storage medium stores a computer program (which may also be referred to as code or instructions), and when the computer program runs on a computer, the computer is enabled to perform the method in any possible implementation of the foregoing aspects.

According to a seventh aspect, a chip system is provided. The chip system includes at least one processor configured to support implementation of a function in any one of the foregoing aspects, for example, receiving or processing data in the foregoing methods.

In a possible design, the chip system further includes a memory. The memory is configured to store program instructions and data. The memory is located inside or outside the processor.

Optionally, the chip system may include a chip, or may include a chip and another discrete device.

According to an eighth aspect, a communication system is provided, including a first terminal and a second terminal. The first terminal is configured to implement the method in any possible implementation of the first aspect, and the second terminal is configured to implement the method in any possible implementation of the second aspect.

In a possible design, the communication system may further include another device that interacts with the first terminal and/or the second terminal in the solutions provided in this application.

### BRIEF DESCRIPTION OF DRAWINGS

FIG. 1 is a diagram of a communication scenario applicable to an embodiment of this application;
FIG. 2 is a diagram of another communication scenario applicable to an embodiment of this application;
FIG. 3 is a schematic flowchart of a channel determining method according to an embodiment of this application;
FIG. 4 is a diagram of a format of a notification frame;
FIG. 5 is a diagram of a synchronization slot;
FIG. 6 is a schematic flowchart of another channel determining method according to an embodiment of this application;
FIG. 7 is a schematic flowchart of still another channel determining method according to an embodiment of this application;
FIG. 8 is a schematic block diagram of a communication apparatus according to an embodiment of this application; and
FIG. 9 is a schematic block diagram of another communication apparatus according to an embodiment of this application.

### DESCRIPTION OF EMBODIMENTS

The following describes technical solutions of this application with reference to accompanying drawings.

To describe the technical solutions of this application more clearly, the following explains related concepts in this application.
1. A channel is a path for transmitting a signal in a communication system, and includes a transmission medium through which the signal is transmitted from a transmit end to a receive end. According to the 802.11 protocol of the Institute of Electrical and Electronics Engineers (institute of electrical and electronics engineers, IEEE), a 2.4 gigahertz (gigahertz, GHz) Wi-Fi frequency band is classified into 13 overlapping channels, and a width of each channel is 22 megahertz (megahertz, MHz); and a 5 GHz Wi-Fi frequency band is classified into 201 channels.
   In the following, for ease of description, a 5 GHz Wi-Fi frequency band and a 2.4 GHz Wi-Fi frequency band are referred to as: a 5G frequency band and a 2.4G frequency band.
2. An intra-frequency and intra-channel mode means that two channels of a Wi-Fi connection are separately used to communicate with an external device, and the two channels are the same and belong to a same frequency band.
3. An inter-frequency and inter-channel mode means that two channels of a Wi-Fi connection are separately used to communicate with an external device, and the two channels are different and belong to different frequency bands.

The inter-frequency and inter-channel mode may be further classified into an inter-frequency and inter-channel dual band adaptive concurrent (dual band adaptive concurrent, DBAC) mode and an inter-frequency and inter-channel dual band dual concurrent (dual band dual concurrent, DBDC) mode. In the inter-frequency and inter-channel DBDC mode, a Wi-Fi chip integrates two sets of media access control (media access control, MAC), physical (physical, PHY) layers, and radio frequency (radio frequency, RF), and may operate separately on 2.4 GHz and 5 GHz, that is, a terminal including a chip that supports DBDC can operate in both a 2.4G frequency band and a 5G frequency band. In the inter-frequency and inter-channel DBAC mode, a Wi-Fi chip integrates only one set of MAC, PHY, and RF, the RF has two channels, one channel supports 2.4 GHz, and the other channel supports 5 GHz; and the chip can dynamically switch between a 2.4G frequency band and a 5G frequency band during use, to implement time division multiplexing communication in the two frequency bands. In other words, a terminal including a chip that supports a DBAC capability cannot operate in different frequency bands at the same time, and can perform communication in different frequency bands only in a time division multiplexing manner.

Because a network architecture of a basic service set (basic service set, BSS) is excessively heavy, complex steps such as scanning and discovery, network access negotiation, key negotiation, heartbeat detection, and network exit cannot meet a plug-and-play requirement of a user. Therefore, in some embodiments, a flexible peer-to-peer network architecture with an unlimited quantity of accesses is proposed. In the peer-to-peer network architecture, a plurality of terminals can be freely interconnected without a role limitation, to meet the plug-and-play requirement of the user. However, in a conventional peer-to-peer network, for example, a peer-to-peer (peer-to-peer, P2P) network, a terminal cannot simultaneously support a plurality of P2P services due to a role limitation. In other words, when performing a projection service, the terminal cannot perform a service such as file sharing with another terminal. Based on this requirement, a solution in which terminals can be freely interconnected without a role limitation is currently proposed.

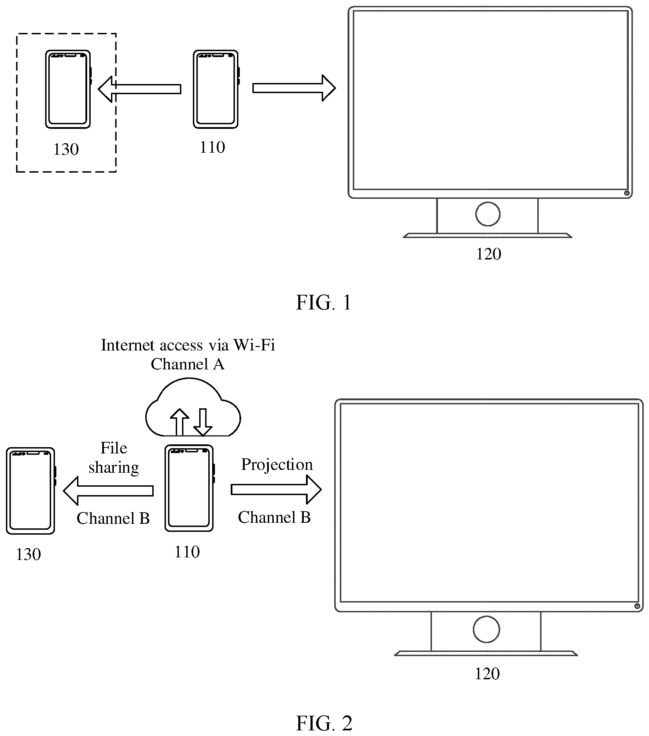

With reference to FIG. 1, the following describes a diagram of a communication scenario in which a plurality of terminals are freely interconnected without a role limitation.

FIG. 1 is a diagram of a communication scenario applicable to an embodiment of this application. As shown in FIG. 1, the communication scenario may include a terminal 110 and a terminal 120. Optionally, the scenario may further include a terminal 130. The terminal 110 may be interconnected to the terminal 120 and/or the terminal 130 through a communication network, to transmit data. The communication network may be but is not limited to a short-range communication network such as a Wi-Fi hotspot network, a P2P network, a Bluetooth (Bluetooth) network, a ZigBee (ZigBee) network, or a near field communication (near field communication, NFC) network. During data transmission, one terminal may be used as a transmit device, and another terminal or the other two terminals may be used as a receive device/receive devices. It should be additionally noted herein that the transmit device and the receive device are classified based on a file transfer direction, and based on different file transfer directions, any terminal may be a transmit device or a receive device.

In a possible scenario, when terminals communicate with each other, the terminals may perform a Wi-Fi internet access service at the same time.

A terminal in embodiments of this application is a device having a wireless transceiver function, and may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal is a device that provides a user with voice and/or data connectivity, for example, a handheld device or a vehicle-mounted device having a wireless connection function. Currently, the terminal may be, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a sensor terminal, a sensing terminal, a device integrating communication and sensing, a cellular phone, a cordless phone, a session initiation protocol (session initiation protocol, SIP) phone, a wireless local loop (wireless local loop, WLL) station, a personal digital assistant (personal digital assistant, PDA), a handheld terminal with a wireless communication function, a computing device or another processing device connected to a wireless modem, a vehicle-mounted device, a drone, a terminal in a 5G network, a terminal in a future evolved public land mobile communication network (public land mobile network, PLMN), and the like. A specific technology, a device form, and a name of the terminal are not limited in embodiments of this application. FIG. 1 shows an example in which the transmit device is a mobile phone and the receive device is a tablet computer. An actual application is not limited thereto.

It should be understood that FIG. 1 is merely a simplified diagram for ease of understanding. The communication scenario may further include another device that is not shown in FIG. 1.

With reference to the scenario shown in FIG. 1, the following describes another communication scenario with reference to FIG. 2 by using an example in which the terminal 110 is a transmit end, and the terminal 120 and the terminal 130 are receive ends.

FIG. 2 shows a diagram of another communication scenario applicable to an embodiment of this application. As shown in FIG. 2, in the communication scenario, the terminal 110 is accessing an internet via Wi-Fi, and simultaneously performs a projection service with the terminal 120 and shares a file with the terminal 130 over a many-to-many protocol. The terminal 110 uses a channel A to access the internet, and uses a channel B for the projection service and a file sharing service.

For the terminal 110, the terminal 110 uses different channels for internet access and data transmission. When the terminal 110 does not support a DBDC mode, the terminal 110 cannot simultaneously operate on two different channels. To be specific, the terminal 110 operates on the channel A for a period of time, and operates on the channel B for a period of time. Consequently, an internet access speed, a projection speed, and a file sharing speed are unstable, and user experience is poor.

In view of this, embodiments of this application provide a channel determining method and a related apparatus. A first terminal and a second terminal that establish a link separately receive a channel list from a peer device, and determine, based on a channel list of the terminal itself and the channel list of the peer device, a third channel used for communication, where the third channel is a channel included in both a first channel list and a second channel list. In this way, the first terminal and the second terminal may communicate with each other through a channel supported by both the two terminals, and when the terminal does not support the DBDC mode, the terminal may be in an intra-frequency and intra-channel mode. This avoids a DBAC mode, reduces a data transmission delay, and improves user experience.

To clearly describe the technical solutions in embodiments of this application, the following descriptions are first provided.

First, in the following embodiments, terms and English abbreviations such as dual band dual concurrent and dual band adaptive concurrent are all examples provided for ease of description, and should not constitute any limitation on this application. This application does not exclude a possibility of defining another term that can implement a same or similar function in an existing or a future protocol.

Second, "first", "second", and various numbers in the following embodiments are merely used for differentiation for ease of description, but are not intended to limit the scope of embodiments of this application, for example, are used to differentiate different channel lists.

Third, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. The character "/" generally indicates an "or" relationship between associated objects. "At least one of the following items (pieces)" or a similar expression thereof indicates any combination of these items, including a single item (piece) or any combination of a plurality of items (pieces). For example, at least one of a, b, and c may represent a, b, c, a and b, a and c, b and c, or a, b, and c, where a, b, and c may be single or plural.

Fourth, the word such as "example" or "for example" represents an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

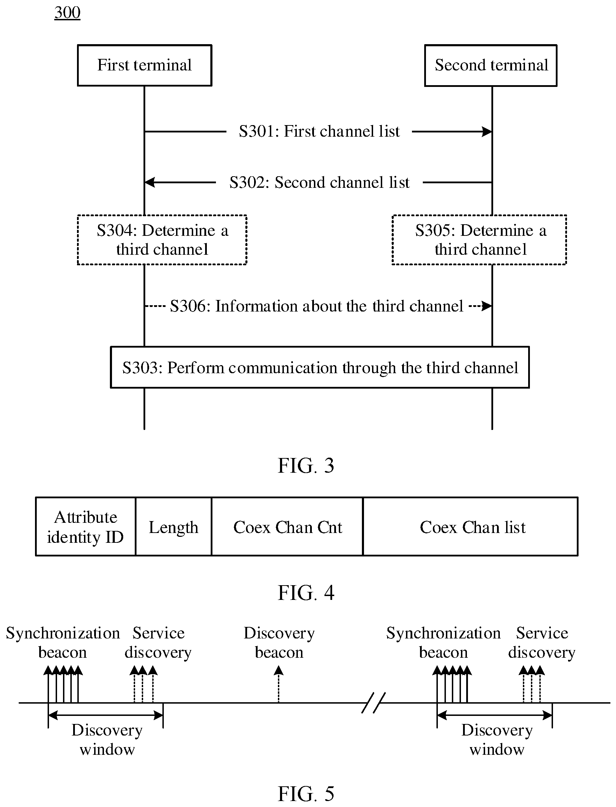

The following describes in detail the channel determining method provided in embodiments of this application with reference to FIG. 3. The method may be applied to the communication scenario shown in FIG. 1 and the communication scenario shown in FIG. 2. However, this is not limited in embodiments of this application.

In a flowchart shown in FIG. 3, the method is shown from a perspective of interaction between a first terminal and a second terminal. However, an execution body of the method is not limited in this application. For example, the first terminal and the second terminal in FIG. 3 each may alternatively be a chip, a chip system, or a processor that support the terminal in implementing the method, or may be a logical module or software that can implement all or some functions of the terminal.

FIG. 3 is a schematic flowchart of a channel determining method 300 according to an embodiment of this application. As shown in FIG. 3, the method 300 may include S301 to S303. The following describes steps in the method 300 in detail.

S301: The first terminal sends a first channel list, where the first channel list includes a channel supported by the first terminal. Correspondingly, the second terminal receives the first channel list.

The first channel list may include one or more channels, and when the first channel list includes a plurality of channels, the plurality of channels may be sorted according to a first rule.

For example, the first rule may be preferentially sorting frequency bands, and then sorting channels in each frequency band based on channel quality; or the first rule may be that a terminal directly sorts channels based on channel quality.

S302: The second terminal sends a second channel list, where the second channel list includes a channel supported by the second terminal. Correspondingly, the first terminal receives the second channel list.

The second channel list may include one or more channels, and when the second channel list includes a plurality of channels, the plurality of channels may be sorted according to the first rule.

It should be further understood that the first channel list and the second channel list in this embodiment of this application may be transmitted in another short-range manner such as Bluetooth or Wi-Fi.

S303: The first terminal communicates with the second terminal through a third channel. The third channel is a channel included in both the first channel list and the second channel list.

For example, the channel included in both the first channel list and the second channel list may be one or more channels. When a plurality of channels are included in both the first channel list and the second channel list, the third channel may be a first channel in the plurality of channels. The first channel may be any one of the plurality of channels.

In this embodiment of this application, the first terminal and the second terminal respectively send, to a peer end, the respective channel supported by the terminal itself, determine the third channel based on the received channel and the channel supported by the terminal itself, and perform communication with each other through the third channel. In this way, a channel for communication between the first terminal and the second terminal is a channel supported by both the first terminal and the second terminal. Therefore, if the first terminal is in a station (station, STA) mode and is accessing an internet via Wi-Fi before the two terminals exchange the supported channel, the channel supported by the first terminal in this case is a channel used for internet access, and when the second terminal also supports the channel, the two terminals may communicate with each other through the channel. When a terminal does not support a DBDC mode, the channel determining method provided in this application can effectively avoid a DBAC scenario, reduce a data transmission delay, and improve user experience.

For example, in this embodiment of this application, the first terminal may be a terminal in a first terminal group (the first terminal group may also be referred to as an island, a domain, a cluster, or the like), and the second terminal may be a terminal in a second terminal group (the first terminal group may also be referred to as an island, a domain, a cluster, or the like). The first terminal group may include at least one first terminal, and the second terminal group may include at least one second terminal. It should be noted that when the first terminal group or the second terminal group includes a plurality of terminals, the plurality of terminals communicate with each other through a same channel.

In an optional embodiment, the channel supported by the first terminal may be determined based on a frequency band supported by the first terminal, a chip capability of the first terminal, and a channel used by the first terminal.

Optionally, when the first terminal does not use a channel, the channel supported by the first terminal is determined based on the frequency band supported by the first terminal and the chip capability of the first terminal.

Optionally, when the first terminal uses a channel, the channel supported by the first terminal is determined based on the frequency band supported by the first terminal, the chip capability of the first terminal, and the channel used by the first terminal.

For example, the channel used by the first terminal indicates a current connection status of the first terminal. For example, if the first terminal is currently accessing an internet via Wi-Fi, the channel used by the first terminal is a channel for internet access via Wi-Fi.

In an optional embodiment, the channel supported by the second terminal may be determined based on a frequency band supported by the second terminal, a chip capability of the second terminal, or a channel used by the second terminal.

Optionally, when the second terminal does not use a channel, the channel supported by the second terminal is determined based on the frequency band supported by the second terminal and the chip capability of the second terminal.

Optionally, when the second terminal uses a channel, the channel supported by the second terminal is determined based on the frequency band supported by the second terminal, the chip capability of the second terminal, and the channel used by the second terminal.

For example, the channel used by the second terminal indicates a current connection status of the second terminal. For example, if the second terminal is currently communicating with a third terminal, the channel used by the second terminal is a channel for communication with the third terminal.

In an optional embodiment, the frequency band may include a 2.4G frequency band, a 5G frequency band, and a 6G frequency band.

In an optional embodiment, the chip capability may include supporting dual band dual concurrent or supporting dual band adaptive concurrent.

For example, when the first terminal includes a chip supporting a dual band dual concurrent capability, the first terminal may simultaneously perform communication in different frequency bands; or when the first terminal includes a chip supporting a dual band adaptive concurrent capability, the first terminal may perform time division multiplexing communication in different frequency bands.

For example, when the second terminal includes the chip supporting the dual band dual concurrent capability, the second terminal may simultaneously perform communication in different frequency bands; or when the second terminal includes the chip supporting the dual band adaptive concurrent capability, the second terminal may perform time division multiplexing communication in different frequency bands.

It should be understood that, after determining the channel supported by the first terminal or the second terminal, the first terminal or the second terminal may send the channel supported by the terminal itself to the peer end in a form of a channel list, another form, or the like.

In an optional embodiment, the method 300 further includes S304 in which the first terminal determines the third channel.

For example, that the first terminal determines the third channel includes: The first terminal obtains an intersection set of the second channel list and the first channel list, to obtain a third channel list; and the first terminal determines a channel (referred to as the third channel in this application) from the third channel list, where the channel is used for communication between the first terminal and the second terminal.

In an optional embodiment, the method 300 further includes S305 in which the second terminal determines the third channel.

For example, that the second terminal determines the third channel includes: The second terminal obtains an intersection set of the first channel list and the second channel list, to obtain a third channel list; and the second terminal determines a channel (referred to as the third channel in this application) from the third channel list, where the channel is used for communication between the first terminal and the second terminal.

It should be noted that the first terminal and the second terminal determine the third channel according to a same rule. For example, a 1^{st} channel in the third channel list is determined as the third channel. In this way, when the third channel list includes a plurality of channels, it can be ensured that a channel determined by the first terminal for communication between each other is the same as a channel determined by the second terminal for communication between each other.

In an optional embodiment, the method 300 further includes S306 in which the first terminal sends information about the third channel to the second terminal. Correspondingly, the second terminal receives the information about the third channel.

It should be understood that the information about the third channel may be a channel identifier of the third channel or other information identifying the third channel. This is not limited in this application.

It should be understood that an execution sequence of S304 and S305 is not limited in this embodiment of this application. For example, S304 may be performed before S305, S305 may be performed before S304, or S304 and S305 may be performed simultaneously. It should be noted that, when S304 and S305 are performed, S306 may not continue to be performed.

In a possible implementation, only one of S304 or S305 may be performed. For example, only S304 is performed, or only S305 is performed. When only S304 is performed, S306 needs to be performed; or when only S305 is performed, the second terminal needs to send the information about the third channel to the first terminal.

It should be noted that S304, S305, or S306 is performed before S303. That is, after determining the third channel, the first terminal and the second terminal may continue to perform S303.

In this embodiment of this application, when the first terminal and the second terminal are in a link establishment state, that is, when the first terminal and the second terminal communicate with each other through the third channel, the channel supported by the first terminal changes, for example, the channel supported by the first terminal changes because the first terminal accesses an internet via Wi-Fi, roams to another channel, or switches a channel through a channel switching announcement (channel switch announcement, CSA). In this case, the first terminal needs to update the first channel list to obtain a fourth channel list.

It should be understood that, for a process of determining a channel included in the fourth channel list, refer to the foregoing description of determining a channel included in the first channel list. Details are not described herein again.

In an optional embodiment, the method 300 further includes: The first terminal sends the fourth channel list to the second terminal, where the fourth channel list includes a channel determined when the channel supported by the first terminal changes. Correspondingly, the second terminal receives the fourth channel list, and determines, based on the fourth channel list, a channel used for communication.

In this embodiment of this application, the fourth channel list is sent to the second terminal when the channel supported by the first terminal changes, so that a DBAC scenario can be effectively avoided when the channel supported by the first terminal changes.

For example, the fourth channel list may be notified to another terminal (including the second terminal) in another short-range communication manner such as Bluetooth or Wi-Fi, or the fourth channel list may be carried in a notification frame and sent to another terminal (including the second terminal) through a Wi-Fi synchronization slot. For a format of the notification frame, refer to FIG. 4. As shown in FIG. 4, the notification frame includes an attribute identity (attribute identity, attribute ID), a length (length), a coexistence channel count (coexistence channel count, Coex Chan Cnt), and a coexistence channel list (Coex Chan list). Length represents a total quantity of bytes of an attribute, Coex Chan Cnt represents a number of channels supported by the first terminal, that is, a number of channels included in the fourth channel list, Coex Chan list represents the channel supported by the first terminal, that is, the fourth channel list.

FIG. 5 shows a synchronization slot. As shown in FIG. 5, a discovery window (discovery window, DW) in the slot is used by a terminal to send a synchronization beacon (beacon) and a service discovery request, and a slot other than the DW is used by a controlling device to send a discovery beacon (discovery beacon). The notification frame may be sent in the DW. For detailed descriptions of the diagram of the slot shown in FIG. 5, refer to descriptions in the conventional technology. Details are not described herein.

In an optional embodiment, the method 300 further includes: The first terminal sends a switching request, where the switching request is used to request to switch to a channel determined based on the fourth channel list and the second channel list.

It should be understood that the switching request is sent by the first terminal to a controlling device. Correspondingly, the controlling device receives the switching request, and sends a response message to another terminal (including the first terminal), where the response message indicates that the first terminal and the second terminal can communicate with each other through the channel determined based on the fourth channel list and the second channel list. The controlling device is configured to: manage a device in a many-to-many network, send a beacon, synchronize time, manage a channel, and the like.

In a possible implementation, the first terminal is the controlling device. When the first terminal is the controlling device, the first terminal does not need to perform the foregoing step of sending the switching request, and may directly send indication information to another terminal, where the indication information indicates that the first terminal and the second terminal communicates with each other through the channel determined based on the fourth channel list and the second channel list.

In another possible implementation, the second terminal is the controlling device. When the second terminal is the controlling device, the second terminal receives the switching request, and sends a response message to another terminal (including the first terminal), where the response message indicates that the first terminal and the second terminal can communicate with each other through the channel determined based on the fourth channel list and the second channel list.

In an optional embodiment, the method 300 further includes: The first terminal determines the first channel list.

For example, that the first terminal determines the first channel list includes: when channels supported by the first terminal include a plurality of frequency bands, sorting the plurality of channels based on types of the frequency bands; and when each frequency band includes a plurality of channels, sorting, based on channel quality, the channels included in each frequency band, to obtain the first channel list. For example, if the channels supported by the first terminal include all channels in a 2.4G frequency band and all channels in a 5G frequency band, the first terminal may preferentially arrange all the channels in the 2.4G frequency band, and then arrange all the channels in the 5G frequency band; and then, the first terminal may separately sort, based on channel quality, all the channels supported by the 2.4G frequency band and all the channels supported by the 5G frequency band.

In an optional embodiment, the method 300 further includes: The second terminal determines the second channel list.

For a process of determining the second channel list, refer to the foregoing description of determining the first channel list. Details are not described herein again.

In an optional embodiment, when communication between the first terminal and the second terminal ends, and a link is established again, the method 300 further includes: The first terminal resends, to the second terminal, the channel supported by the terminal itself, and similarly, the second terminal resends, to the first terminal, the channel supported by the terminal itself, to re-determine a channel used for communication between the first terminal and the second terminal. In other words, each time the first terminal and the second terminal establish a link, the first terminal and the second terminal need to resend a respective supported channel list to a peer end, to determine a channel for communication between the first terminal and the second terminal.

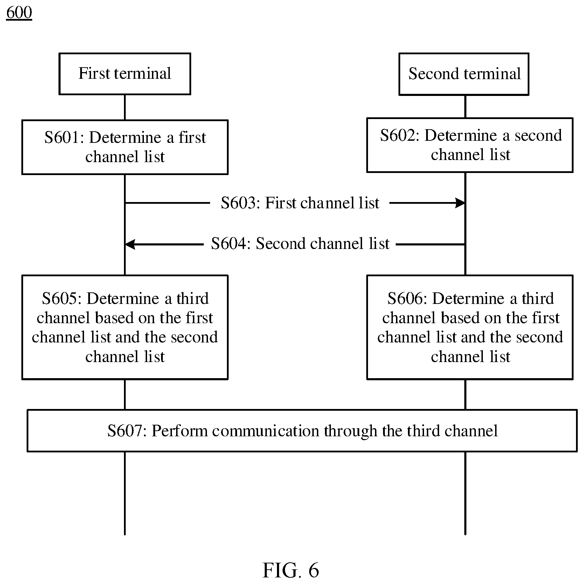

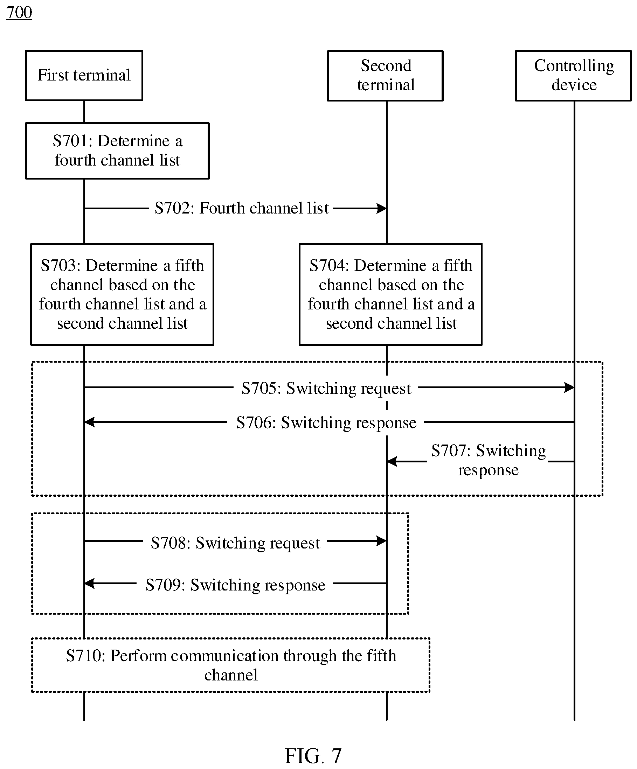

Based on the embodiment shown in FIG. 3, the following separately describes channel determining methods provided in this application with reference to FIG. 6 and FIG. 7, and content described in the embodiment shown in FIG. 3 is not described again.

The following describes a channel determining method provided in embodiments of this application by using an example in which a first terminal establishes a link to a second terminal.

FIG. 6 is a schematic of another channel determining method 600 according to an embodiment of this application. As shown in FIG. 6, the method 600 may include S601 to S607. The following describes in detail steps shown in FIG. 6.

S601: The first terminal determines a first channel list, where a channel included in the first channel list is a channel supported by the first terminal.

The channel supported by the first terminal is determined based on a frequency band supported by the first terminal, a chip capability of the first terminal, and a channel used by the first terminal.

For descriptions of the frequency band, the chip capability, and the used channel, refer to related descriptions in the method 300. For a process of determining the first channel list, refer to related descriptions of determining the first channel list in the method 300. Details are not described herein again.

S602: The second terminal determines a second channel list, where a channel included in the second channel list is a channel supported by the second terminal.

The channel supported by the second terminal is determined based on a frequency band supported by the second terminal, a chip capability of the second terminal, and a channel used by the second terminal.

For descriptions of the frequency band, the chip capability, and the used channel, refer to related descriptions in the method 300. For a process of determining the second channel list, refer to related descriptions of determining the second channel list in the method 300. Details are not described herein again.

S603: The first terminal sends the first channel list to the second terminal. Correspondingly, the second terminal receives the first channel list.

S604: The second terminal sends the second channel list to the first terminal. Correspondingly, the first terminal receives the second channel list.

It should be understood that the first channel list and the second channel list may be sent in another short-range manner such as Bluetooth or Wi-Fi.

S605: The first terminal determines a third channel based on the first channel list and the second channel list.

For descriptions of determining the third channel by the first terminal, refer to S304. Details are not described herein again.

S606: The second terminal determines a third channel based on the first channel and the second channel list.

For descriptions of determining the third channel by the second terminal, refer to the method S305. Details are not described herein again.

S607: The first terminal communicates with the second terminal through the third channel.

For example, the first terminal performs a service such as screen projection or file sharing with the second terminal through the third channel.

For beneficial effects of this embodiment of this application, refer to beneficial effects shown in the method 300. Details are not described herein again.

The following describes a channel determining method provided in embodiments of this application by using an example in which a channel supported by a first terminal changes after a link is established between the first terminal and a second terminal.

FIG. 7 is a schematic of still another channel determining method 700 according to an embodiment of this application. As shown in FIG. 7, the method 700 may include S701 to S710. The following describes in detail steps shown in FIG. 7.

S701: The first terminal determines a fourth channel list, where the fourth channel list includes a channel determined when the channel supported by the first terminal changes.

S702: The first terminal sends the fourth channel list to the second terminal. Correspondingly, the second terminal receives the fourth channel list.

For descriptions of the fourth channel list, refer to related descriptions in the foregoing method 300. Details are not described herein again.

S703: The first terminal determines a fifth channel based on the fourth channel list and a second channel list.

S704: The second terminal determines a fifth channel based on the fourth channel and a second channel list.

It should be understood that, after the fifth channel is determined, the first terminal and the second terminal need to communicate with each other through the fifth channel. However, it should be noted that whether the first terminal and the second terminal can communicate with each other through the fifth channel needs to be determined by a controlling device.

In a possible implementation, the first terminal is the controlling device. When the first terminal is the controlling device, the first terminal may send indication information to the second terminal, where the indication information indicates that the first terminal and the second terminal can communicate with each other through the fifth channel.

In another possible implementation, neither the first terminal nor the second terminal is the controlling device. When neither the first terminal nor the second terminal is the controlling device, the following three steps S705 to S707 may be performed.

S705: The first terminal sends a switching request to the controlling device, where the switching request is used to request to switch to the fifth channel. Correspondingly, the controlling device receives the switching request.

S706: The controlling device sends a switching response to the first terminal, where the switching response indicates the first terminal and the second terminal to communicate with each other through the fifth channel.

S707: The controlling device sends a switching response to the second terminal, where the switching response indicates the first terminal and the second terminal to communicate with each other through the fifth channel.

In another possible implementation, the second terminal is the controlling device. When the second terminal is the controlling device, the following two steps S708 and S709 may be performed.

S708: The first terminal sends a switching request to the second terminal, where the switching request is used to request to switch to the fifth channel. Correspondingly, the controlling device receives the switching request.

S709: The second terminal sends a switching response to the first terminal, where the switching response indicates the first terminal and the second terminal to communicate with each other through the fifth channel.

It should be understood that, when the second terminal is the controlling device, the second terminal may directly send indication information to the first terminal, to indicate that the first terminal and the second terminal can communicate with each other through the fifth channel.

In conclusion, in the foregoing three possible implementations, when the first terminal and the second terminal can communicate with each other through the fifth channel, S710 in which the first terminal and the second terminal communicate with each other through the fifth channel continues to be performed.

In this embodiment of this application, when the channel supported by the first terminal changes, the first terminal may re-determine the fourth channel list, send the fourth channel list to the second terminal, and re-determine, based on the fourth channel list and a channel supported by the second terminal, a channel used for communication. In this way, even if the channel supported by the first terminal changes, DBAC of the first terminal can be effectively avoided, data transmission performance can be reduced, and user experience can be improved.

It should be understood that sequence numbers of the foregoing processes do not mean execution sequences. The execution sequence of the processes should be determined based on functions and internal logic of the processes, and should not be construed as any limitation on implementation processes of embodiments of this application.

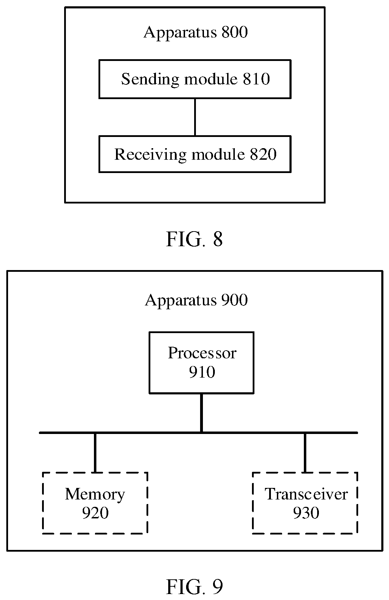

The foregoing describes in detail methods in embodiments of this application with reference to FIG. 3 to FIG. 7. The following describes in detail communication apparatuses in embodiments of this application with reference to FIG. 8 and FIG. 9.

FIG. 8 shows a communication apparatus 800 according to an embodiment of this application. As shown in FIG. 8, the apparatus 800 includes a sending module 810 and a receiving module 820. Optionally, the apparatus 800 further includes a processing module.

In a possible implementation, the communication apparatus 800 is the foregoing first terminal or a chip of the first terminal.

The sending module 810 is configured to send a first channel list, where the first channel list includes a channel supported by the first terminal; the receiving module 820 is configured to receive a second channel list from a second terminal, where the second channel list includes a channel supported by the second terminal; and the sending module 810 and the receiving module 820 are further configured to communicate with the second terminal through a third channel.

Optionally, the channel supported by the first terminal is determined based on a frequency band supported by the first terminal, a chip capability of the first terminal, and a channel used by the first terminal.

Optionally, the frequency band includes a 2.4G frequency band, a 5G frequency band, and a 6G frequency band.

Optionally, the chip capability includes supporting dual band dual concurrent or supporting dual band adaptive concurrent, the dual band dual concurrent indicates that the first terminal can simultaneously perform communication in different frequency bands, and the dual band adaptive concurrent indicates that the first terminal can perform time division multiplexing communication in different frequency bands.

Optionally, the sending module 810 is further configured to send information about the third channel to the second terminal.

Optionally, the sending module 810 is further configured to send a fourth channel list, where the fourth channel list includes a channel determined when the channel supported by the first terminal changes.

Optionally, the sending module 810 is further configured to send a switching request, where the switching request is used to request to switch to a channel determined based on the fourth channel list and the second channel list.

Optionally, the processing module is configured to: when channels supported by the first terminal are in a plurality of frequency bands, sort the plurality of channels based on types of the frequency bands; and when each frequency band includes a plurality of channels, sort, based on channel quality, the channels included in each frequency band, to obtain the first channel list.

Optionally, the first channel list and the second channel list jointly include one or more channels, and the third channel is a first channel of the one or more channels.

In an optional example, a person skilled in the art may understand that the apparatus 800 may be specifically the first terminal in the foregoing embodiments, and the apparatus 800 may be configured to perform procedures and/or steps corresponding to the first terminal in the method 300, the method 600, and the method 700. To avoid repetition, details are not described herein again.

In another possible implementation, the communication apparatus 800 is a second terminal or a chip of the second terminal.

The receiving module 820 is configured to receive information about a third channel, where the third channel is a channel included in both a first channel list and a second channel list, the first channel list includes a channel supported by a first terminal, and the second channel list includes a channel supported by the second terminal. The sending module 810 and the receiving module 820 are further configured to communicate with the first terminal through the third channel.

Optionally, the channel supported by the second terminal is determined based on a frequency band supported by the second terminal, a chip capability of the second terminal, or a channel used by the second terminal.

Optionally, the frequency band includes a 2.4G frequency band, a 5G frequency band, and a 6G frequency band.

Optionally, the chip capability includes supporting dual band dual concurrent or supporting dual band adaptive concurrent, the dual band dual concurrent indicates that the second terminal can simultaneously perform communication in different frequency bands, and the dual band adaptive concurrent indicates that the second terminal can perform time division multiplexing communication in different frequency bands.

Optionally, the receiving module 820 is further configured to receive a fourth channel list, where the fourth channel list includes a channel determined when the channel supported by the first terminal changes.

Optionally, the receiving module 820 is further configured to receive a switching request, where the switching request is used to request to switch to a channel determined based on the fourth channel list and the second channel list.

Optionally, the processing module is configured to: when channels supported by the second terminal are in a plurality of frequency bands, sort the plurality of channels based on types of the frequency bands; and when each frequency band includes a plurality of channels, sort, based on channel quality, the channels included in each frequency band, to obtain the second channel list.

Optionally, the first channel list and the second channel list jointly include one or more channels, and the third channel is a first channel of the one or more channels.

In an optional example, a person skilled in the art may understand that the apparatus 800 may be specifically the second terminal in the foregoing embodiments, and the apparatus 800 may be configured to perform procedures and/or steps corresponding to the second terminal in the method 300, the method 600, and the method 700. To avoid repetition, details are not described herein again.

It should be understood that the communication apparatus 800 herein is embodied in a form of a functional module. The term "module" herein may be an application-specific integrated circuit (application specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the communication apparatus 800 may be specifically the first terminal or the second terminal in the foregoing embodiments, or functions of the first terminal or the second terminal in the foregoing embodiments may be integrated into the communication apparatus 800, and the communication apparatus 800 may be configured to perform procedures and/or steps corresponding to the first terminal or the second terminal in the foregoing method embodiments. To avoid repetition, details are not described herein again.

The communication apparatus 800 has a function of implementing corresponding steps performed by the first terminal or the second terminal in the foregoing methods, and the foregoing function may be implemented by hardware, or may be implemented by hardware executing corresponding software. The hardware or the software includes one or more modules corresponding to the function. For example, the transceiver module 820 may be a communication interface, for example, a transceiver interface.

FIG. 9 shows another communication apparatus 900 according to an embodiment of this application. The communication apparatus 900 includes a processor 910. Optionally, the apparatus 900 may further include a memory 920 and a transceiver 930. The processor 910, the memory 920, and the transceiver 930 are connected through an internal connection path. The memory 920 is configured to store instructions. The processor 910 is configured to execute the instructions stored in the memory 920, to enable the communication apparatus 900 to perform the channel determining methods provided in the foregoing method embodiments.

It should be understood that functions of the communication apparatus 800 in the foregoing embodiment may be integrated into the communication apparatus 900, and the communication apparatus 900 may be configured to perform steps and/or procedures corresponding to the first terminal in the foregoing method embodiments, or the communication apparatus 900 may be further configured to perform steps and/or procedures corresponding to the second terminal in the foregoing method embodiments. Optionally, the memory 920 may include a read-only memory and a random access memory, and provides instructions and data for the processor. A part of the memory may further include a non-volatile random access memory. For example, the memory may further store information of a device type. The processor 910 may be configured to execute the instructions stored in the memory, and when the processor executes the instructions, the processor 910 may perform steps and/or procedures corresponding to the first terminal in the foregoing method embodiments, or the processor 910 may perform steps and/or procedures corresponding to the second terminal in the foregoing method embodiments.

It should be understood that, in this embodiment of this application, the processor 910 may be a central processing unit (central processing unit, CPU), or the processor 910 may be another general-purpose processor, a digital signal process (digital signal processor, a DSP), an ASIC, a field programmable gate array (field programmable gate array, FPGA) or another programmable logic device, a discrete gate or a transistor logic device, a discrete hardware component, or the like. The processor 910 may be a microprocessor, or the processor 910 may be any conventional processor or the like.

In an implementation process, steps in the method 300, the method 600, and the method 700 may be completed by using an integrated logic circuit of hardware in the processor or an instruction in a form of software. Steps of the methods disclosed with reference to embodiments of this application may be directly performed by a hardware processor, or may be performed by using a combination of hardware and a software module in the processor. The software module may be located in a mature storage medium in the art, such as a random access memory, a flash memory, a read-only memory, a programmable read-only memory, an electrically erasable programmable memory, or a register. The storage medium is located in the memory, and the processor reads instructions in the memory and completes the steps in the foregoing methods in combination with hardware of the processor. To avoid repetition, details are not described herein again.

This application further provides a computer-readable medium. The computer-readable medium stores a computer program, and when the computer program is executed by a computer, the method in any one of the foregoing method embodiments is implemented.

This application further provides a computer program product. When the computer program product is executed by a computer, the method in any one of the foregoing method embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer terminal (which may be a personal computer, a server, or a network terminal) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A channel determining method, applied to a first terminal, wherein the method comprises:
sending a first channel list, wherein the first channel list comprises a channel supported by the first terminal;
receiving a second channel list from a second terminal, wherein the second channel list comprises a channel supported by the second terminal; and
communicating with the second terminal through a third channel, wherein the third channel is a channel comprised in both the first channel list and the second channel list.

2. The method according to claim 1, wherein the channel supported by the first terminal is determined based on a frequency band supported by the first terminal, a chip capability of the first terminal, and a channel used by the first terminal.

3. The method according to claim 2, wherein the frequency band comprises a 2.4G frequency band, a 5G frequency band, and a 6G frequency band.

4. The method according to claim 2 or 3, wherein the chip capability comprises supporting dual band dual concurrent or supporting dual band adaptive concurrent, the dual band dual concurrent indicates that the first terminal can simultaneously perform communication in different frequency bands, and the dual band adaptive concurrent indicates that the first terminal can perform time division multiplexing communication in different frequency bands.

5. The method according to any one of claims 1 to 4, wherein the method further comprises:
sending information about the third channel to the second terminal.

6. The method according to any one of claims 1 to 5, wherein the method further comprises:
sending a fourth channel list, wherein the fourth channel list comprises a channel determined when the channel supported by the first terminal changes.

7. The method according to claim 6, wherein the method further comprises:
sending a switching request, wherein the switching request is used to request to switch to a channel determined based on the fourth channel list and the second channel list.

8. The method according to any one of claims 1 to 7, wherein the method further comprises:
when channels supported by the first terminal are in a plurality of frequency bands, sorting the plurality of channels based on types of the frequency bands; and
when each frequency band comprises a plurality of channels, sorting, based on channel quality, the channels comprised in each frequency band, to obtain the first channel list.

9. The method according to any one of claims 1 to 8, wherein the first channel list and the second channel list jointly comprise one or more channels, and the third channel is a first channel of the one or more channels.

10. A channel determining method, applied to a second terminal, wherein the method comprises:
receiving information about a third channel, wherein the third channel is a channel comprised in both a first channel list and a second channel list, the first channel list comprises a channel supported by a first terminal, and the second channel list comprises a channel supported by the second terminal; and
communicating with the first terminal through the third channel.

11. The method according to claim 10, wherein the channel supported by the second terminal is determined based on a frequency band supported by the second terminal, a chip capability of the second terminal, and a channel used by the second terminal.

12. The method according to claim 11, wherein the frequency band comprises a 2.4G frequency band, a 5G frequency band, and a 6G frequency band.

13. The method according to claim 11 or 12, wherein the chip capability comprises supporting dual band dual concurrent or supporting dual band adaptive concurrent, the dual band dual concurrent indicates that the second terminal can simultaneously perform communication in different frequency bands, and the dual band adaptive concurrent indicates that the second terminal can perform time division multiplexing communication in different frequency bands.

14. The method according to any one of claims 10 to 13, wherein the method further comprises:
receiving a fourth channel list, wherein the fourth channel list comprises a channel determined when the channel supported by the first terminal changes.

15. The method according to claim 14, wherein the method further comprises:
receiving a switching request, wherein the switching request is used to request to switch to a channel determined based on the fourth channel list and the second channel list.

16. The method according to any one of claims 10 to 13, wherein the method further comprises:
when channels supported by the second terminal are in a plurality of frequency bands, sorting the plurality of channels based on types of the frequency bands; and
when each frequency band comprises a plurality of channels, sorting, based on channel quality, the channels comprised in each frequency band, to obtain the second channel list.

17. The method according to any one of claims 10 to 16, wherein the first channel list and the second channel list jointly comprise one or more channels, and the third channel is a first channel of the one or more channels.

18. A communication apparatus, comprising a module configured to implement the method according to any one of claims 1 to 17.

19. A communication apparatus, comprising a processor, wherein the processor is configured to execute a computer program, to enable the communication apparatus to implement the method according to any one of claims 1 to 17.

20. The apparatus according to claim 19, wherein the apparatus further comprises a memory, and the memory is configured to store the computer program.

21. A computer-readable storage medium, wherein the computer-readable storage medium stores a computer program, and when the computer program is executed by a processor, the method according to any one of claims 1 to 17 is implemented.

22. A computer program product, comprising a computer program, wherein when the computer program is run, the method according to any one of claims 1 to 17 is implemented.

23. A communication system, comprising a first terminal and a second terminal, wherein the first terminal is configured to implement the method according to any one of claims 1 to 9, and the second terminal is configured to perform the method according to any one of claims 10 to 17.
